# EUROPEAN PATENT APPLICATION

(11) **EP 3 053 790 A1**
(43) Date of publication of application: **10.08.2016**
(21) Application number: 15305168.5
(22) Date of filing: 05.02.2015
(51) Int. Cl.: B60S 1/38, B60S 1/52

(54) **Nozzle for a vehicle window wiper**

(71) Applicant: Valeo Systèmes d'Essuyage, 78321 Le Mesnil Saint Denis (FR)
(72) Inventor: Thebault, Denis, 63000 Clermont Ferrand (FR); Grasso, Giuseppe, 63340 Le Breuil sur Couze (FR); Schaeuble, Michael, 71665 VAIHINGEN/ENZ (DE)
(74) Representative: Callu Danseux, Violaine

(57) **Abstract**

Nozzle (42) for a window wiper of a vehicle, in particular a motor vehicle, comprising holes (50) for spraying fluid, characterised in that at least two of said holes have different geometric characteristics in cross section.

## Description

The present invention relates to a nozzle for a window wiper of a vehicle, in particular a motor vehicle, this nozzle being able to equip a window wiper blade or arm.

A motor vehicle is conventionally equipped with window wipers to wash the windscreen and prevent the driver's vision of his/her surroundings from being impaired. These window wipers generally comprise a driving arm, which performs an angular back-and-forth movement, and elongate blades, which for their part bear scraping edges made of a resilient material. These scrapers rub against the windscreen and carry away the water by removing it from the driver's field of vision. The blades are produced in the form of either, in a conventional version, hinged brackets which hold the scraping edge at a plurality of discreet locations by bending said edge so as to match any curvature in the windscreen, or, in a more recent version labelled the *"flat blade",* a semi-rigid assembly that maintains the scraping edge along its entire length by means of one or more bending vertebra allowing the blade to be applied to the windscreen without the need to use brackets.

In both solutions, the blade is attached to the driving arm by a fastener composed of a connector and an adapter. The connector is a part that is directly fastened onto either the scraping edge or the flat blade, whereas the adapter is an intermediate piece allowing the connector to be connected and fastened to the driving arm. These two parts are interconnected by a transverse hinge pin allowing their relative rotation in a plane that is perpendicular to the windscreen and passes through the arm. The adapter is further configured for engagement in a head or end piece in the form of a cap of the driving arm.

The window wipers may comprise accessories such as means for spraying window-cleaning liquid onto the windscreen. These spraying means may be located on the bonnet, on the grille of the windscreen bay or, in a more recent version, on the window wipers; for example, it is known to provide such spraying means on the window wiper blades or even on their driving arms. In this case, the window-cleaning liquid is carried as far as the spraying means by ducts that are fastened to the arms and connected to a pump and to a reservoir, which are generally housed under the bonnet of the vehicle.

The present invention proposes a simple, efficient and cost-effective improvement to this technology and relates in particular to spraying means, or "nozzles", which are specifically designed to better control the quantity of window-cleaning liquid sprayed and thus the consumption of window-cleaning liquid.

The present invention relates to a nozzle for a window wiper of a vehicle, in particular a motor vehicle, comprising holes for spraying fluid, characterised in that at least two of said holes have different geometric characteristics in cross section.

In the present application, the term "geometric characteristics" refers in particular to features relating to the shape and/or the dimensions of the holes. These features are those of the cross section of the holes, and preferably of the cross section of the outlet of the holes. The term "cross section of a hole" refers to a cross section which is substantially perpendicular to the axis (of orientation) of the hole.

The nozzle may comprise one or more of the following features, taken in isolation from one another or in combination with one another:
- at least three of said holes have different geometric characteristics in cross section;
- said at least two or three holes have different shapes and/or dimensions in cross section;
- said at least two or three holes have different diameters in cross section;
- each of said at least two or three holes have a circular, oblong or polygonal shape in cross section;
- said at least two or three holes have substantially parallel axes;
- said at least two or three holes have axes which are inclined relative to one another;
- said at least two or three holes are substantially aligned in one and the same plane;
- the nozzle comprises a fluid feed duct for said at least two or three holes;
- the nozzle comprises connection means, such as fastening means, for connection to part of a blade or an arm of said window wiper;
- the nozzle is rigidly connected to and is, for example, formed in one piece with an end piece of the arm, a central connector of the blade or an end fitting of the blade.

The present invention also relates to a window wiper arm of a vehicle, in particular a motor vehicle, comprising at least one nozzle of the type described above. Said at least one nozzle may be borne by an end piece of the arm, for example having a U-shaped cross section.

The present invention also relates to a window wiper blade of a vehicle, in particular a motor vehicle, comprising at least one nozzle of the type described above. Said at least one nozzle is borne by a central connector of the blade or by an end fitting of the blade.

The invention will be better understood, and other details, features and advantages thereof will become apparent, upon reading the following description provided by way of non-limiting example with reference to the accompanying drawings, in which:
- Fig. 1 is a schematic perspective view of a window wiper,
- Fig. 2 is a schematic perspective view on a larger scale of the end piece of the window wiper arm in Fig. 1,
- Fig. 3 is a schematic perspective view of a nozzle and the support for fastening it to the arm,
- Fig. 4 is a schematic perspective view of an end piece of a window wiper arm equipped with a nozzle,
- Fig. 5 is another schematic perspective view of the end piece and of the nozzle in Fig. 4, the nozzle in this case being shown in part by dotted lines,
- Fig. 6 is another schematic perspective view of an end piece of an arm and a nozzle according to the invention,
- Fig. 7 is a highly schematic view, similar to that in Fig. 6, and shows a variant according to the invention,
- Fig. 8a to 8g are schematic cross sectional views of outlet holes of a nozzle according to the invention,
- Fig. 9 is a highly schematic side view of a window wiper blade, a central connector of which is equipped with a nozzle according to the invention,
- Fig. 10 is a highly schematic plan view of a window wiper blade, a central connector of which is equipped with a nozzle according to the invention.
- Fig. 11 is a highly schematic side view of a window wiper blade, an end fitting of which is equipped with a nozzle according to the invention, and
- Fig. 12 is a highly schematic plan view of a window wiper blade, an end fitting of which is equipped with a nozzle according to the invention.

It should be noted that the figures show the invention in a detailed manner so that the invention may be carried out; said figures may, of course, be used to better define the invention where necessary.

In the description that follows, the terms "longitudinal" and "lateral" refer to the orientation of the window wiper blade or of the driving arm. The longitudinal direction corresponds to the main axis of the blade or of the arm in which it extends, whereas the lateral orientations correspond to concurrent straight lines; that is, straight lines that intersect the longitudinal direction, in particular those perpendicular to the longitudinal axis of the blade or of the arm in its plane of rotation. As regards the longitudinal directions, the terms "outer" and "inner" are to be understood relative to the point at which the blade is fastened to the arm, the term "inner" corresponding to the portion where the arm and a half-blade extend, or relative to the point at which the arm is fastened to the vehicle. The directions referred to as "upper" and "lower" correspond to orientations perpendicular to the plane of rotation of the window wiper blade, the term "lower" including the plane of the windscreen. Finally, the term "horizontal" refers to one or more planes that are substantially parallel to the plane of the windscreen, and the term "vertical" refers to one or more planes that are substantially perpendicular to the plane of the windscreen.

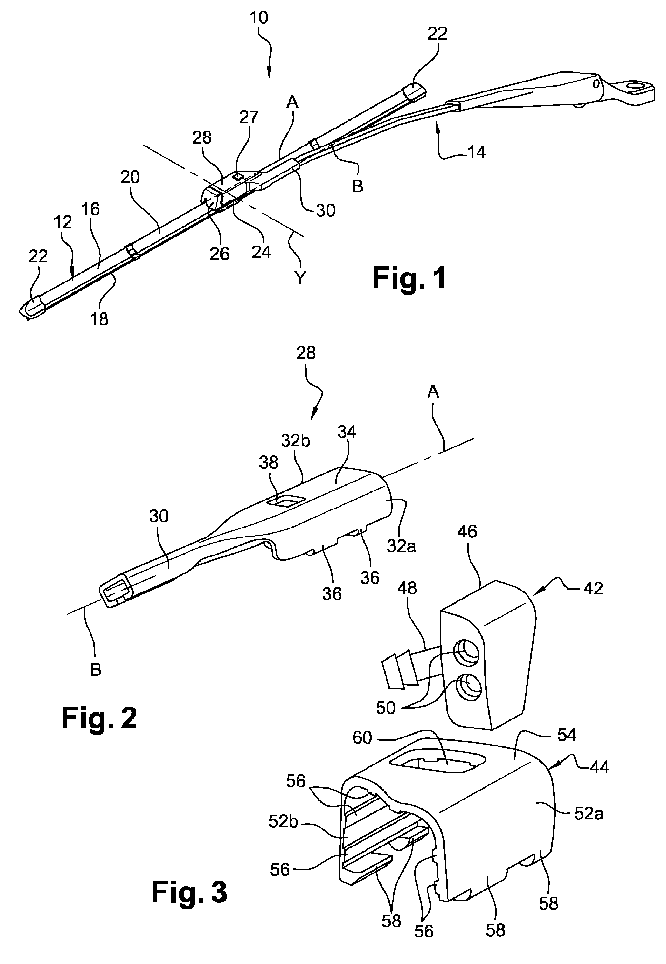

Fig. 1 shows a window wiper 10 comprising in particular a blade 12 and an arm 14 for driving the blade 12.

The blade 12 is preferably a flat blade and comprises a longitudinal body 16, a wiping edge 18, generally made of rubber, and at least one vertebra (not shown) which reinforces the wiper and facilitates its application on a vehicle windscreen.

The body 16 of the blade 12 may comprise an upper aerodynamic deflector 20 for improving operation of the wiping system, the aim of this deflector being to improve application of the blade on the windscreen and thus the aerodynamic performance of the window wiper.

The blade 12 may further comprise end fittings 22 or clips for hooking the scraper 18 and the vertebra onto the body 16, these end fittings 22 being located at each of the longitudinal ends of the body 16.

The blade 12 comprises an intermediate connector 24 substantially at its centre. An adapter 26 that is rigidly connected to the arm 14 is installed on the connector 24 so as to maintain a degree of freedom as it pivots about a pivot axis Y, which is a transverse axis substantially perpendicular to the longitudinal axis of the blade 12. This degree of freedom allows the blade 12 to pivot relative to the arm 14 and thus allows the blade to follow the curvature of the windscreen as it moves. The adapter 26 can be detached from the arm 14 by pressing on a push button 27 borne by the adapter.

The arm 14 is intended to be driven by a motor to follow an angular back-and-forth movement making it possible to carry away water and possibly other undesirable elements covering the windscreen. The adapter 26 joins the blade 12 to the arm 14 and in particular to a head or end piece 28 of the arm, which may be formed in one piece with the arm or applied to and fastened thereon.

The end piece 28 of the arm (which can be seen more clearly in Fig. 2) forms a cap of substantially U-shaped cross section.

The end piece 28 has an elongated shape of which the axis of elongation A is generally substantially parallel to the axis of elongation or the longitudinal axis of the blade 12. The end piece 28 comprises a portion 30 to be connected to the rest of the arm 14, for example by crimping. This portion 30 has a generally elongated shape and extends along an axis B that is substantially parallel to the axis A and at a spacing from said axis, as can be seen in Fig. 1 and 2. The portion 30 is connected to a rear or inner end of the rest of the end piece 28.

The end piece 28 comprises two lateral longitudinal walls 32a, 32b of which the upper longitudinal edges are interconnected by an upper transverse wall 34. The walls 32a, 32b, 34 define between them a space for housing the adapter 26. At their lower longitudinal edges, the walls 32a, 32b comprise means 36, such as hooks, for holding the adapter 26 in the aforesaid space.

The upper wall 34 comprises a through-opening 38 of a complementary shape to the push button 27. In the installation position, the push button 27 is housed in this opening 38 and may pass therethrough so as to project onto the upper face of the wall 34. The push button 27 is installed in the opening 38 by simple engagement or nesting.

Fig. 3 shows a nozzle 42 and its support 44 for fastening it to the end piece 28 of the arm.

The nozzle 42 and the support 44 are detached from each other in this case but are intended to be rigidly interconnected, preferably prior to their installation on the arm 14. They can be made of any material, for example plastics material. They can be fastened to each other by any means, for example by gluing or welding, for instance by ultrasonic welding.

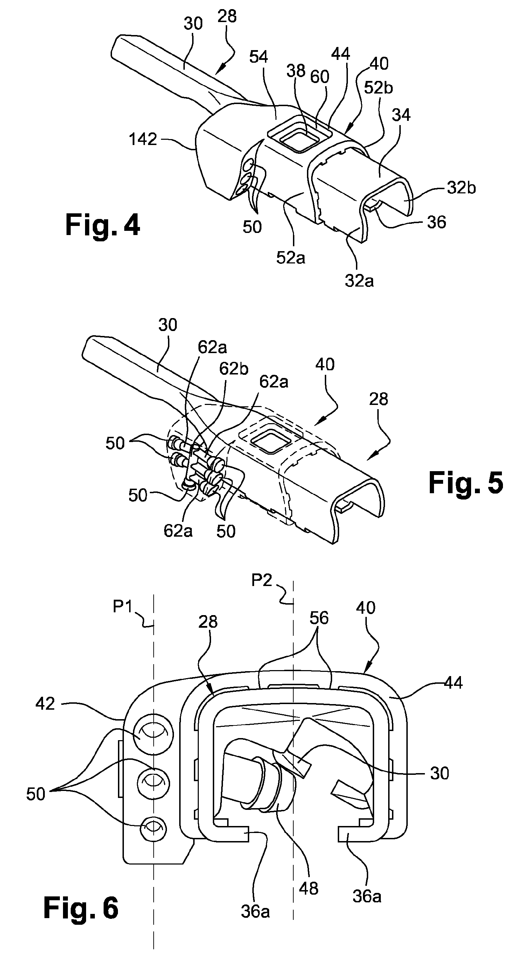

The nozzle 42 comprises a body 46 of generally parallelepiped shape, for example, and a connection cannula 48. The body 46 comprises at least two holes 50 (five in this case) for spraying window-cleaning liquid. Two holes 50 (shown in Fig. 3) are located on a rear face of the nozzle 42, and three holes 50 (shown in Fig. 4) are located on a front face of the nozzle. This allows the window-cleaning liquid to be sprayed in a plurality of different directions and thus separate zones to be defined at which the liquid strikes the windscreen of the vehicle.

The holes 50 are connected to the cannula 48 by inner ducts 62a, 62b which are shown transparently in Fig. 5. First ducts 62a each have an end connected to a hole 50 and an opposite end which is connected to a second duct 62b. In this case, the first ducts 62a have a substantially longitudinal orientation along the axis of the blade 12. The second duct 62b has a transverse orientation which is substantially vertical and parallel to the walls 32a, 32b of the end piece 28. The second duct 62b is connected by its lower end to the internal passage of the cannula 48.

The cannula 48 comprises a male end fitting for engagement in one end of a flexible tube, of which the other end is connected to a pump and to a window-cleaning liquid reservoir of the vehicle equipped with the window wiper. The tube extends along part of the arm and can be fastened thereto by appropriate means.

The support 44 forms a cover and has a generally U-shaped cross section which, in this case, is substantially complementary to that of the end piece 28 of the arm.

The support 44 has an elongated shape and comprises two lateral longitudinal walls 52a, 52b of which the upper longitudinal edges are interconnected by an upper transverse wall 54. The walls 52a, 52b, 54 define between them a space for receiving the end piece 28. The support 44 is in fact intended in this case for installation by straddling the end piece 28, such that its upper wall 58 rests substantially on the upper wall 34 of the end piece and that its lateral walls 52a, 52b rest substantially on the lateral walls 32a, 32b of the end piece. On their faces oriented toward the end piece 28, the walls 52a, 52b, 54 may comprise longitudinal ribs 56 for resting on the walls 32a, 32b, 34 of the end piece.

The walls 52a, 52b, 54 of the support 44 are thus dimensioned to allow this installation. The wall 54 has a larger width or transverse dimension than that of the wall 34. Preferably, said wall has a smaller length or longitudinal dimension than that of the wall 34, as can be seen in particular in the embodiment in Fig. 4. The walls 52a, 52b have larger heights or vertical dimensions than those of the walls 32a, 32b. These walls 52a, 52b comprise means 58 for arresting the fitting 40 on the end piece 28.

The upper wall 54 comprises a through-hole 60 that is intended for alignment with the opening 38 in the end piece 28, as can be seen in the embodiment in Fig. 4, so as to make accessible the push button 27 of the adapter 26. The hole 60 may have larger (in particular longitudinal and transverse) dimensions than those of the opening 38.

Reference is now made to Fig. 6, which shows a first embodiment of the invention. As can be clearly seen from the figure, and by contrast with the prior art, at least two of the holes 50 of the nozzle 42 have different geometric characteristics in cross section. Only some of the holes 50 of the nozzle 42 may exhibit different geometric characteristics, such as the holes of one of the faces of the nozzle. However, all the holes 50 of the nozzle 42 might exhibit different geometric characteristics.

In the example shown in Fig. 6, the holes 50 all have the same geometric shape, in this case circular or round, and have different diameters. There are three holes 50 on the front face of the nozzle 42, said holes being aligned one above the other in a plane P1 which is parallel to the central longitudinal plane P2 of the blade, which plane is in turn parallel to the lateral walls of the end piece 28.

The holes 50 are positioned from bottom to top, from the smallest to the largest diameter, and are at a substantially equal spacing from one another.

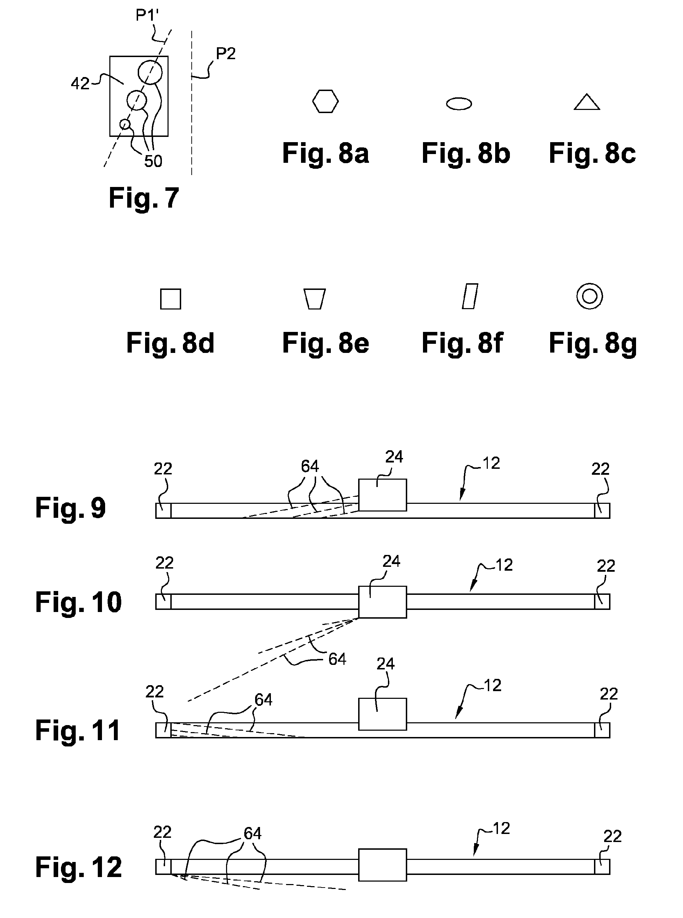

Fig. 7 shows a variant of the invention in which the holes 50 are, in this case, aligned one behind the other in a plane P1' which is inclined relative to the aforesaid plane P2.

As shown in Fig. 8a to 8g, the holes 50 of the nozzle according to the invention are not necessarily circular in shape, but may be of any shape. They may be polygonal in shape (hexagonal - Fig. 8a, triangular - Fig. 8c, square - Fig. 8d, trapezoidal - Fig. 8e, etc.). They may be oblong in shape (Fig. 8b), or annular in shape (Fig. 8g). They may also be inclined (Fig. 8f). One nozzle may comprise holes of the same size or diameter and of different shapes. Any combination of shape and dimension of the holes is possible.

The nozzle 42 according to the invention may, of course, be installed on an element of the window wiper other than the driving arm 14 or the end piece 28 thereof.

Fig. 9 to 12 show variants of the invention in which the nozzle is, in this case, borne by the blade 12 of the window wiper.

In the embodiments in Fig. 9 and 10, the nozzle is borne by the blade connector 24 and, in the embodiments in Fig. 11 and 12, the nozzle is borne by an end fitting 22 of the blade.

The nozzles are not shown in Fig. 9 to 12. Only the axes of orientation 64 of the holes 50 of the nozzles are shown. These axes can be assimilated to the spray jets leaving the holes 50.

It will be noted that, in Fig. 9 and 11, the axes 64 are substantially parallel to one another and can all be located substantially in one and the same plane, said plane substantially corresponding to the aforesaid plane P1 or P1'. In Fig. 10 and 12, the axes 64 are inclined relative to one another.

As can be seen in the drawings, the zones at which the window-cleaning liquid strikes the windscreen of the vehicle are spaced apart from each other. The orientations of the axes 64 are designed in particular to optimise the distribution of the window-cleaning liquid on the windscreen of the vehicle.

For a specific flow of liquid delivered by the ducts 62a, 62b, the larger the cross section of a hole 50 (i.e. for example, the larger the diameter of the hole), the lower the speed at which the liquid is ejected by this hole and the smaller the distance the liquid is sprayed. It can thus be understood that holes of a smaller cross section are used to spray the liquid a greater distance than holes of a larger cross section. The holes of an intermediate cross section are used to spray the liquid an intermediate distance.

## Claims

1. Nozzle (42) for a window wiper (10) of a vehicle, in particular a motor vehicle, comprising holes (50) for spraying fluid, **characterised in that** at least two of said holes have different geometric characteristics in cross section.

2. Nozzle (42) according to claim 1, wherein at least three of said holes (50) have different geometric characteristics in cross section.

3. Nozzle (42) according to either claim 1 or claim 2, wherein said at least two or three holes (50) have different shapes and/or dimensions in cross section.

4. Nozzle (42) according to claim 3, wherein said at least two or three holes (50) have different diameters in cross section.

5. Nozzle (42) according to any of the preceding claims, wherein each of said at least two or three holes (50) has a circular, oblong or polygonal shape in cross section.

6. Nozzle (42) according to any of the preceding claims, wherein said at least two or three holes (50) have substantially parallel axes (64).

7. Nozzle (42) according to any of claims 1 to 5, wherein said at least two or three holes (50) have axes (64) which are inclined relative to one another.

8. Nozzle (42) according to any of the preceding claims, wherein said at least two or three holes are substantially aligned in one and the same plane (P1, P1').

9. Nozzle (42) according to any of the preceding claims, wherein said nozzle comprises a fluid feed duct (62b) for said at least two or three holes (50).

10. Nozzle (42) according to any of the preceding claims, wherein said nozzle comprises connection means, such as fastening means, for connection to part of a blade (12) or an arm (14) of said window wiper (10).

11. Nozzle (42) according to claim 10, wherein said nozzle is rigidly connected to and is, for example, formed in one piece with an end piece (28) of the arm (14), a central connector (24) of the blade (12) or an end fitting (22) of the blade.

12. Arm (14) of a window wiper (10) of a vehicle, in particular a motor vehicle, comprising at least one nozzle (42) according to any of the preceding claims.

13. Arm (14) according to claim 12, wherein said at least one nozzle (42) is borne by an end piece (28) of the arm, for example having a U-shaped cross section.

14. Blade of a window wiper (10) of a vehicle, in particular a motor vehicle, comprising at least one nozzle (42) according to any of claims 1 to 11.

15. Blade according to claim 14, wherein said at least one nozzle (42) is borne by a central connector (24) of the blade or by an end fitting (22) of the blade.
